(19) Europäisches Patentamt
European Patent Office
Office européen des brevets

(11) Veröffentlichungsnummer: **0 256 983**
**B1**

(12) # EUROPÄISCHE PATENTSCHRIFT

(45) Veröffentlichungstag der Patentschrift: **27.09.89**

(51) Int. Cl.⁴: **C09B 67/22**, C07D 487/04, C08K 5/34, D06P 1/642

(21) Anmeldenummer: **87810445.4**

(22) Anmeldetag: **03.08.87**

(54) **Feste Lösungen von Pyrrolo-[3,4-c]-pyrrolen.**

(30) Priorität: **07.08.86 CH 3171/86**

(43) Veröffentlichungstag der Anmeldung: **24.02.88 Patentblatt 88/8**

(45) Bekanntmachung des Hinweises auf die Patenterteilung: **27.09.89 Patentblatt 89/39**

(84) Benannte Vertragsstaaten: **CH DE FR GB IT LI NL**

(56) Entgegenhaltungen:
**EP-A- 0 094 911**
**EP-A- 0 181 290**
**EP-A- 0 184 982**

(73) Patentinhaber: **CIBA-GEIGY AG, Klybeckstrasse 141, CH-4002 Basel(CH)**

(72) Erfinder: **Bäbler, Fridolin, Dr., Route du Couchant 12, CH-1723 Marly(CH)**

**EP 0 256 983 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die vorliegende Erfindung betrifft feste Lösungen von 1,4-Diketo-pyrrolo-[3,4-c]-pyrrolen und ihre Verwendung zum Färben von hochmolekularem organischem Material.

Aus EP-A 94 911 und EP-A 181 290 sind Diketopyrrolopyrrol-Pigmentmischungen bekannt, die durch Mischsynthese erhalten werden. Es handelt sich dabei immer zwingend um Gemische von mindestens drei Diketopyrrolopyrrol-Pigmenten und zwar folgender drei Typen

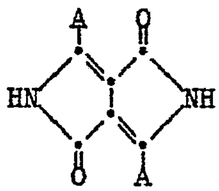 , 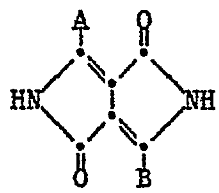 , 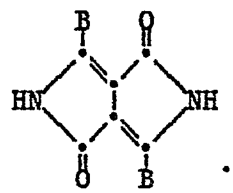 .

Es ist nun gefunden worden, dass man feste Lösungen aus zwei unterschiedlichen Diketopyrrolopyrrol-Pigmenten erhalten kann, die sich durch hervorragende Pigmenteigenschaften auszeichnen.

Die vorliegende Erfindung betrifft demnach feste Lösungen von 1,4-Diketo-pyrrolo-[3,4-c]-pyrrolen, bestehend aus zwei unterschiedlichen Verbindungen der Formeln

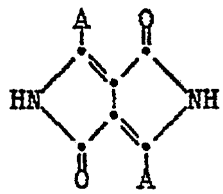 und 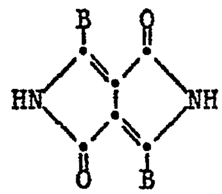

(I) (II),

der Formeln

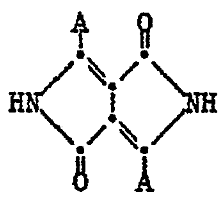 und 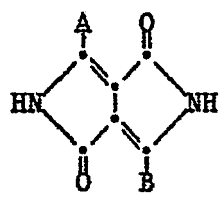

(I) (III)

oder der Formeln

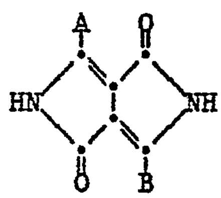 und 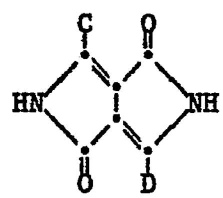

(III) (IV) ,

worin A eine der Gruppen

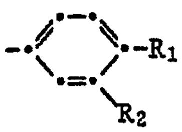 , 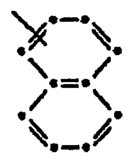 , 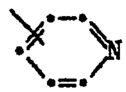 ,

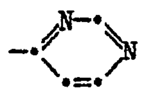 , 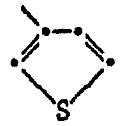

und B, C und D unabhängig voneinander eine der Gruppen

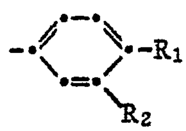 oder 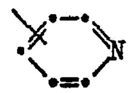

bedeuten, worin $R_1$ und $R_2$ unabhängig voneinander Wasserstoff, Halogen, $C_1$-$C_5$-Alkyl, $C_1$-$C_5$-Alkoxy, $-SR_3$, $-N(R_3)_2$, $-CF_3$, -CN oder eine Gruppe der Formeln

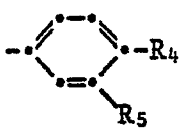 , 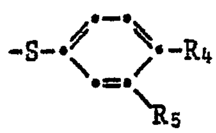 oder 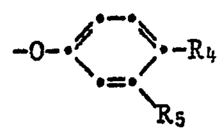

bedeuten, $R_3$ $C_1$-$C_5$-Alkyl ist und $R_4$ und $R_5$ unabhängig voneinander Wasserstoff, Halogen, $C_1$-$C_5$-Alkyl, $C_1$-$C_5$-Alkoxy, $-SR_3$ oder -CN bedeuten, wobei sich die Röntgenbeugungsdiagramme der festen Lösungen von der Summe der Röntgenbeugungsdiagramme der Einzelkomponenten unterscheiden.

Bedeuten etwaige Substituenten Halogen, so handelt es sich dabei z.B. um Fluor, vorzugsweise Brom und insbesondere Chlor.

Bedeuten etwaige Substituenten $C_1$-$C_5$-Alkyl, so meint man damit z.B. Methy, Ethyl, n-Propyl, Isopropyl, n-Butyl, sec.-Butyl, tert.-Butyl, n-Pentyl, Isopentyl, Neopentyl oder tert.-Pentyl.

Etwaige Substituenten, die $C_1$-$C_5$-Alkoxy bedeuten, stellen z.B. Methoxy, Ethoxy, n-Propoxy, n-Butoxy, sec.-Butoxy, n-Pentyloxy, Isopentyloxy oder Neopentyloxy dar.

Von besonderem .Interesse sind feste Lösungen aus zwei unterschiedlichen Verbindungen der Formeln I und II, worin A und B die oben angegebene Bedeutung haben.

Von ganz besonderem Interesse sind feste Lösungen aus zwei unterschiedlichen Verbindungen der Formeln I und II, worin A und B unabhängig voneinander eine Gruppe der Formeln

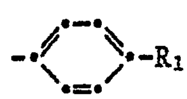 oder 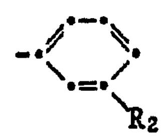

bedeuten, worin $R_1$ Wasserstoff, Chlor, Brom, Cyano, Methyl, Ethyl, tert.-Butyl oder Phenyl und $R_2$ Wasserstoff, Chlor, Methyl oder Cyano bedeuten.

Bevorzugt sind feste Lösungen aus der Verbindung der Formel

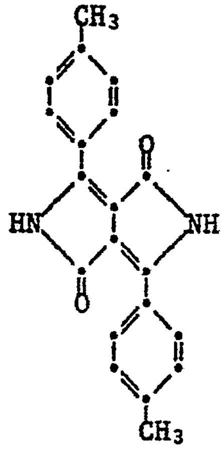

und a) der Verbindung der Formel

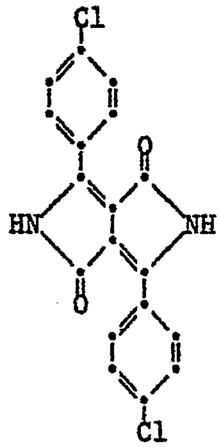

oder b) der Verbindung der Formel

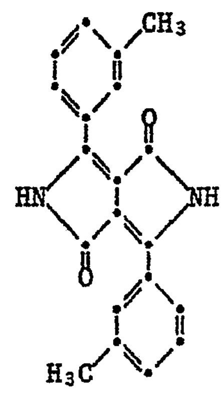

.

In den erfindungsgemässen festen Lösungen beträgt das Verhältnis zwischen den beiden Komponenten der Formeln I:II, I:III oder III:IV zweckmässig 50-95:5-50, bevorzugt 65-90:10-35 Gew.%.

Die erfindungsgemässen festen Lösungen können ausgehend von physikalischen Mischungen der oben definierten Komponenten der Formeln I und II, I und III oder III und IV nach folgenden an und für sich bekannten Verfahren hergestellt werden:

- durch Kontaktierung in polaren organischen Lösungsmitteln, bevorzugt durch Verrühren der Komponentenmischung bei Rückflusstemperatur,
- durch alkalische Umfällung der Komponentenmischung in polaren organischen Lösungsmitteln oder durch Verrühren der Komponentenmischung in polaren organischen Lösungsmitteln in Gegenwart von Alkalialkoholaten, Alkalihydroxiden oder quaternären Ammoniumverbindungen,
- durch saure Umfällung, d.h. Auflösung der Komponentenmischung in Säure und Fällung der festen Lösung durch Verdünnen mit Wasser oder
- durch intensive Mahlung oder Knetung der Komponentenmischung, gegebenenfalls mit anschliessender Rekristallisation in Wasser und/oder organischen Lösungsmitteln.

Als polare organische Lösungsmittel in deren Gegenwart die Einzelkomponenten zur Bildung der erfindungsgemässen festen Lösungen kontaktiert werden, können beispielsweise Dimethylformamid, N-Methylformamid, Tetramethylharnstoff, Dimethylacetamid, N-Methylpyrrolidon, Dimethylsulfoxid, Tetramethylsulfon, Eisessig, Ketone, wie Cyclohexanon, Alkohole, wie n-Butanol, Cyclohexanol oder Benzylalkohol, ferner Ethylenglykol, Propylenglykol, Ether, wie Ethylenglykoldimethylether, Diphenylether, Anisol, sowie aromatische Kohlenwasserstoffe, wie Nitrobenzol, Chlorbenzol, Dichlor- und Trichlorbenzole, Toluol und Xylole oder Ester, wie Ethylacetate oder Butylacetat, erwähnt werden.

Bei der alkalischen Umfällung wird die physikalische Mischung der Einzelkomponenten in einem polaren organischen Lösungsmittel, bevorzugt einem Alkohol der Formel $C_nH_{2n+1}$ -OH, worin n eine ganze Zahl von 1 bis 5 bedeutet, durch Zugabe einer mindestens äquivalenten Menge einer Base, wie z.B. Na-Alkoholat, Natronlauge, Kalilauge oder Ammoniak, gelöst, worauf die feste Lösung durch Verdünnen mit Wasser oder durch Zugabe einer Mineral- oder organischen Säure, wie Salzsäure, Schwefelsäure oder Essigsäure, gefällt wird.

In gewissen Fällen ist es möglich, die erfindungsgemässen Lösungen von separat hergestellten Diketo-pyrrolopyrrolpigmenten direkt durch Mischung der entsprechenden alkoholischen Pigmentsalzsynthesesuspensionen, anschliessender Fällung mit Wasser oder Säure und gegebenenfalls nachträglicher Rekristallisation herzustellen.

Für die saure Umfällung eignen sich insbesondere Schwefel- und Phosphorsäure. Das auf diese Art erhaltene Pigment ist sehr feinkristallin und wird deschalb bevorzugt durch Erwärmung der sauren wässrigen Pigmentsuspension mit oder ohne organischem Lösungsmittel rekristallisiert.

Bevorzugt werden die erfindungsgemässen festen Lösungen ausgehend von den physikalischen Komponentenmischungen durch Mahlung oder Knetung, beispielsweise Salzknetung in Gegenwart eines organischen Lösungsmittels wie Diacetonalkohol, hergestellt.

Besonders bevorzugte Verfahren sind Trockenmahlung, Trockensalzmahlung, Mahlung in einem organischen Lösungsmittel und/oder Wasser. Dabei können als Mahlkörper Metall-, Glas- oder Keramikkugeln, Kunststoffgranulat oder Sandkörner, wie für Pigmente allgemein üblich, verwendet werden.

Die Mahlungen und Knetungen werden zweckmässig bei Temperaturen zwischen 5 und 90°C, vorzugsweise zwischen 15 und 60°C durchgeführt.

Bei der Trockensalzmahlung werden bevorzugt Kochsalz, $CaCl_2$, $Na_2SO_4$ oder $Al_2(SO_4)_3$ mit oder ohne Kristallwasser verwendet. Auf 100 bis 150 Gewichtsteile Salz werden beispielsweise 10 bis 50 Gewichtsteile Pigment verwendet. Dabei kann es von Vorteil sein, dem Mahlmedium geringe Mengen an Lösungsmitteln wie Xylol oder Tetrachlorethylen und/oder Tensiden, wie z.B. Dodecylbenzolsulfonsäurenatriumsalz, zuzufügen. Die Aufarbeitung erfolgt nach an sich bekannter Methode, indem das Pigment/Salzgemisch von den Mahlkörpern getrennt, dann in Wasser gegeben wird, und die erhaltene Pigmentsuspension danach abfiltriert wird.

Wässrige Mahlungen der physikalischen Pigmentmischungen können mit oder ohne Mahlhilfsmittel, wie sie beispielsweise in EP-A-101 666 beschrieben sind, durchgeführt werden. Dabei kann es von Vorteil sein, den pH-Wert vom neutralen in den sauren oder alkalischen Bereich zu verschieben.

Obwohl die erfindungsgemässen festen Lösungen ausgezeichnete applikatorische Eigenschaften aufweisen, kann es vorteilhaft sein, dem Pigment Texturschutzmittel zuzufügen.

Geeignete Texturschutzmittel sind beispielsweise Fettsäuren mit mindestens 12 C-Atomen, wie Stearinsäure oder Behensäure, deren Amide, Salze oder Ester, wie Magnesium-, Zink- oder Aluminiumstearat oder Magnesiumbehenat, ferner quartäre Ammoniumverbindungen, wie Tri-($C_1$-$C_4$)-alkylbenzylammoniumsalze, ferner Weichmacher, wie epoxidiertes Sojabohnenöl, Wachse, wie Polyethylenwachs, Harzsäuren, wie Abietinsäure, Kolophoniumseife, hydriertes oder dimerisiertes Kolophonium, $C_{12}$-$C_{18}$-Paraffindisulfonsäuren, Alkylphenole oder Alkohole, wie Stearylalkohol, ferner Lauryl- oder Stearylamin, sowie aliphatische 1,2-Diole, wie Dodecandiol-1,2.

Bevorzugte Texturschutzmittel sind Lauryl- oder Stearylamin, aliphatische 1,2-Diole, Stearinsäure, deren Amide, Salze oder Ester, epoxidiertes Sojabohnenöl, Wachse oder Harzsäuren.

Solche Zusatzstoffe können in Mengen von 0,05 bis 20, bevorzugt 1 bis 10 Gew.% bezogen auf die feste Pigmentlösung, vor, während oder nach deren Bildung zugegeben werden.

Feste Lösungen können durch ihr Röntgenbeugungsspektrum gekennzeichnet werden, welches sich von demjenigen des physikalischen Gemisches der beiden Einzelkomponenten unterscheidet. Das Röntgenbeugungsdiagramm der erfindungsgemässen festen Lösungen ist durch andere Linien gekennzeichnet als die Summe der Röntgenbeugungsdiagramme der Einzelkomponenten.

Gegenüber den entsprechenden physikalischen Mischungen weisen die erfindungsgemässen festen Lösungen oft überraschend starke Nuancenverschiebungen auf. Man erhält dadurch neue Farbeffekte mit ausgezeichneten Beständigkeiten: Ein besonderer Vorteil der erfindungsgemässen festen Lösungen.

Die erfindungsgemässen festen Lösungen eignen sich ausgezeichnet als Pigmente zum Färben von hochmolekularem organischem Material. Sie weisen gegenüber den Ausgangspigmenten unterschiedliche koloristische Eigenschaften auf und können je nach dem Herstellungsverfahren in transparenter oder deckender Form vorliegen. Durch thermische Nachbehandlung in organischen Lösungsmitteln lassen sie sich beispielsweise gut rekristallisieren, d.h. man erhält eine deckende Form mit einer einheitlichen Pigmentpartikelgrösse und -form. Vorzugsweise verwendet man als organische Lösungsmittel z.B. durch Halogenatome, Alkyl- oder Nitrogruppen substituierte Benzole, wie Xylole, Chlorbenzol, o-Dichlorbenzol oder Nitrobenzol, sowie Pyridinbasen, wie Pyridin, Picolin oder Chinolin, ferner Ketone, wie Cyclohexanon, Alkohole, wie Isopropanol, Butanole oder Pentanole, Ether, wie Ethylenglykolmonomethyl- oder -monoethylether, Amide, wie Dimethylformamid oder N-Methylpyrrolidon, sowie Dimethylsulfoxid oder Sulfolan.

Hochmolekulare organische Materialien, die mit den erfindungsgemässen festen Lösungen gefärbt bzw. pigmentiert werden können, sind z.B. Celluloseether und -ester, wie Ethylcellulose, Nitrocellulose, Celluloseacetat, Cellulosebutyrat, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, ABS, Polyphenylenoxide, Gummi, Casein, Silikon und Silikonharze, einzeln oder in Mischungen.

Besonders geeignet sind die erfindungsgemässen festen Lösungen zum Einfärben von Polyvinylchlorid und Polyolefinen, wie Polyethylen und Polypropylen, sowie zum Pigmentieren von Lacken und Anstrichstoffen.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen festen Lösungen als Toner oder in Form von Präparaten einzusetzen.

Bezogen auf das zu pigmentierende hochmolekulare organische Material kann man die erfindungsgemässen festen Lösungen in einer Menge von 0,01 bis 30 Gew.%, vorzugsweise von 0,1 bis 10 Gew. %, einsetzen.

Die Pigmentierung der hochmolekularen organischen Substanzen mit den erfindungsgemässen festen Lösungen erfolgt beispielsweise derart, dass man eine solche feste Lösung gegebenenfalls in Form von Masterbatches diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzgiessen, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen festen Lösungen in die Polymeren eingearbeitet werden. Zwecks Erzielung verschiedener Farbtöne ist es ferner möglich,

den hochmolekularen organischen Stoffen neben den erfindungsgemässen festen Lösungen noch Füllstoffe bzw. andere farbgebende Bestandteile, wie Weiss-, Bunt- oder Schwarzpigmente, in beliebigen Mengen zuzufügen.

Zum Pigmentieren von Lacken, Anstrichstoffen und Druckfarben werden die hochmolekularen organischen Materialien und die erfindungsgemässen festen Lösungen gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

In Färbungen, beispielsweise von Polyvinylchlorid oder Polyolefine, zeichnen sich die erfindungsgemässen festen Lösungen durch gute allgemeine Pigmenteigenschaften, wie gut Dispergierbarkeit, hohe Farbstärke und Reinheit, gute Migrations-, Hitze-, Licht- und Wetterbeständigkeit aus.

Die nachfolgenden Beispiele erläutern die Erfindung.

Beispiel 1:

a) 7,5 g 3,6-Di(4-methylphenyl)-1,4-diketopyrrolo-[3,4-c]-pyrrol, 42,5 g 3,6-Di(4-chlorphenyl)-1,4-diketopyrrolo-[3,4-c]-pyrrol und 700 ml Eisessig werden in einer Glasapparatur während 18 Stunden bei Rückflusstemperatur verrührt. Die erhaltene Suspension wird bei Raumtemperatur abfiltriert, der Presskuchen wird mit Eisessig gewaschen, im Vakuumtrockenschrank bei 80°C getrocknet und gepulvert. Man erhält 49 g einer roten festen Lösung, deren Röntgenbeugungsdiagramm sich vom Röntgenbeugungsdiagramm der entsprechenden physikalischen Mischung der obengenannten Ausgangsprodukte unterscheidet. Beim Einarbeiten der festern Lösung in Kunststoffe und Lacke erhält man rote Ausfärbungen mit ausgezeichneten Licht-, Hitze-, Migrations- und Wetterbeständigkeiten, deren Nuance sich deutlich von einer Färbung mit der entsprechenden physikalischen Mischung der Ausgangspigmente unterscheidet.

b) Man verfährt analog wie in Beispiel 1a beschrieben, verwendet aber anstelle von 700 ml Eisessig 550 ml 1,2-Hexandiol und rührt 10 Stunden bei 190°C. Man verdünnt die erhaltene Pigmentsuspension vor der Isolierung mit 200 ml Methanol und wäscht den Presskuchen mit Methanol. Man erhält 48,8 g einer roten festen Lösung, welche ein analoges Röntgenbeugungsdiagramm aber einen etwas höheren Kristallinitätsgrad als die gemäss Beispiel 1a erhaltene feste Lösung aufweist.

Zur Bestimmung der Netzebenenabstände (d-Werte) wird das Beugungsbild auf Film registriert. Die Aufnahme erfolgt in Transmission mit einer Guinier-Kamera (Enraf-Nonius FR 552®) und Cu-K-alpha-1-Strahlung (Wellenlänge = 1,54050 Å). Als Eichsubstanz wird Quarz verwendet, dessen d-Werte aus a = 4,913 Å und c= 5,405 Å (PDF 5-490) berechnet werden. In der nachfolgenden Tabelle sind die d-Werte der stärksten Linien (> 2,7 Å) angegeben, zusammen mit den von Auge geschätzten relativen Linienintensitäten

| d-Wert in Å | Intensität |
|---|---|
| 11,7 | mittel |
| 5,79 | sehr schwach |
| 3,61 | stark |
| 3346 | mittel |
| 3,29 | schwach |
| 3,15 | sehr stark |
| 2,87 | stark |
| 2,78 | stark |

Die Farbe der erfindungsgemässen roten festen Lösung ist überraschenderweise blaustichiger als die Hauptkomponente 3,6-Di(-4-chlorphenyl)-1,4-diketo-pyrrolo-[3,4-c]-pyrrol, wenn man bedenkt, dass die Nebenkomponente 3,6-Di-(4-methylphenyl)-1,4-diketopyrrolo-[3,4-c]-pyrrol gelbstichig rot ist.

Beispiel 2:

In einem 750 ml fassenden Glasbehälter werden 450 ml tert.-Amylalkohol vorgelegt und langsam Stickstoff eingeleitet. 6,9 g Natrium und anschliessend 0,9 g Sulfobernsteinsäure-bis-2-äthyl-hexylester-Na-Salz als Emulgator werden in den tert.-Amylalkohol gegeben und das Gemisch langsam auf 95-100°C erwärmt. Unter heftigem Rühren wird das Metall im Alkohol aufgelöst. Die erhaltene Lösung wird auf 60°C abgekühlt. Es werden 34,5 g 3,6-Di-(4-methylphenyl)-1,4-diketopyrrolo-[3,4-c]-pyrrol, sowie 6,0 g 3,6-Di-(3-methylphenyl)-1,4-diketopyrrolo-[3,4-c]-pyrrol zugefügt. Das Reaktionsgemisch wird darauf während 2 1/2 Stunden bei Rückflusstemperatur gerührt, danach auf 60°C abgekühlt.

In einem 2500 ml fassenden Glasgefäss werden 400 ml Wasser vorgelegt und unter Rühren wird die obige Pigmentsalzmischung während 10 Minuten auf das Wasser ausgetragen. Das entstandene Zweiphasengemisch wird während 4 Stunden bei Rückflusstemperatur (85°C) gerührt, dann wird der tert.-Amylalkohol durch Einleiten von Wasserdampf abdestilliert und die Pigmentsuspension abfiltriert. Der Presskuchen wird mit Wasser neutral gewaschen, dann im Vakuumtrockenschrank bei 80°C getrocknet und gepulvert. Man erhält 38,5 g Scharlachfarbene feste Lösung deren Röntgenbeugungsdiagramm sich vom Röntgenbeugungsdiagramm der entsprechenden physikalischen Mischung der oben genannten Ausgangsprodukte unterscheidet.

Die Netzebenenabstände werden wie unter Beispiel 1b) beschrieben bestimmt.

In der nachfolgenden Tabelle sind die d-Werte der stärksten Linien (> 2,3 Å) angegeben, zusammen mit den von Auge geschätzten relativen Linienintensitäten.

| d-Wert in Å | Intensität |
|---|---|
| 11,5 | sehr stark |
| 5,67 | stark |
| 3,64 | schwach |
| 3,61 | mittel |
| 3,32 | sehr stark |
| 3,29 | mittel |
| 2,84 | mittel |
| 2,73 | sehr schwach |
| 2,33 | schwach |

Die Farbe der erfindungsgemässen roten festen Lösung ist überraschenderweise gelbstichiger als die der Hauptkomponente 3,6-Di-(4-methylphenyl)-1,4-diketopyrrolo-[3,4-c]-pyrrol, wenn man bedenkt, dass die Nebenkomponente 3,6-Di-(3-methylphenyl)-1,4-diketopyrrolo-[3,4-c]-pyrrol blaustichig rot ist.

Beispiel 3:

In eine Kugelmühle mit einem Inhalt von ca. 1 Liter enthaltend 1,5 kg Stahlkugeln (∅ : 1,2 cm) und 150 g Nägel (Länge: 3 cm) als Mahlkörper werden 4,3 g 3,6-Di(3-cyanophenyl)-1,4-diketopyrrolo-[3,4-c]-pyrrol, 0,8 g 3,6-Di(4-methylphenyl)-1,4-diketopyrrolo-[3,4-c]-pyrrol, 0,8 ml Tetrachlorethylen, 0,3 g epoxidiertes Sojabohnenöl und 20 g Aluminiumsulfat [$Al_2(SO_4)_3 \cdot 15\text{-}18H_2O$] gegeben. Die gut verschlossene Mühle wird während 6 Stunden auf einer Rollbank bei Raumtemperatur gerollt. Danach wird das Mahlmedium von den Mahlkörpern abgetrennt und in einer Lösung von 1,5 ml conc. Schwefelsäure in 300 ml Wasser verrührt. Die Suspension wird auf 70°C erwärmt und bei dieser Temperatur während 1¼ Stunden gerührt. Das Produkt wird abfiltriert, der Presskuchen wird mit heissem Wasser neutral und salzfrei gewaschen, im Vakuumtrockenschrank bei 70°C getrocknet und gepulvert. Das so erhaltene Pulver wird in 70 ml n-Butanol während 16 Stunden bei Rückflusstemperatur verrührt, danach bei 40°C abfiltriert, der Presskuchen wird mit etwas n-Butanol gewaschen, im Vakuumtrockenschrank bei 70°C getrocknet und gepulvert. Man erhält 4,7 g einer orangefarbigen festen Lösung, deren Röntgenbeugungs diagramm sich von Röntgenbeugungsdiagramm der entsprechenden physikalischen Mischung der oben genannten Ausgangsprodukte unterscheidet. Beim Einarbeiten in Kunststoffe und Lacke erhält man farbstarke orange Ausfärbungen mit sehr guten Licht-, Wetter-, Hitze- und Migrationsbeständigkeiten.

Beispiel 4:

Verfährt man analog wie in Beispiel 3 beschrieben, verwendet aber anstelle von 3,6-Di(4-methylphenyl)-1,4-diketopyrrolo-[3,4-c]-pyrrol 3,6-Di(4-chlorphenyl)-1,4-diketopyrrolo-[3,4-c]-pyrrol, so erhält man eine orangefarbige feste Lösung, deren Röntgenbeugungsdiagramm sich vom Röntgenbeugungsdiagramm der entsprechenden physikalischen Mischung der oben genannten Ausgangsprodukte unterscheidet. Die Einarbeitung in Kunststoffe und Lacke ergibt orange Ausfärbungen mit ausgezeichneten Hitze-, Licht- und Wetterbeständigkeiten.

Beispiel 5:

In einem 350 ml fassenden Glasbehälter werden 150 ml tert.-Amylalkohol vorgelegt und langsam Stickstoff eingeleitet. 2,3 g Natrium und anschliessend 0,3 g Sulfobernsteinsäure-bis-2-äthyl-hexylester-Na-Salz als Emulgator werden in den tert.-Amylalkohol gegeben und das Gemisch langsam auf 95-100°C erwärmt. Unter heftigem Rühren wird das Metall im Alkohol aufgelöst. Die erhaltene Lösung wird auf

60°C abgekühlt. Es werden 11,5 g 3,6-Di-(4-bromphenyl)-1,4-diketopyrrolo-[3,4-c]-pyrrol, sowie 2,0 g 3,6-Di-(4-methylphenyl)-1,4-diketopyrrolo-[3,4-c]-pyrrol zugefügt. Das Reaktionsgemisch wird während 2 Stunden bei Rückflusstemperatur gerührt, danach wird auf 60°C abgekühlt.

In einem 1500 ml fassenden Glasgefäss werden 300 ml Wasser vorgelegt und unter Rühren wird die obige Pigmentsalzmischung während 10 Minuten auf das vorgelegte Wasser ausgetragen. Das entstandene Zweiphasengemisch wird während 4 Stunden bei Rückflusstemperatur (85°C) gerührt. Dann wird der tert.-Amylalkohol abdestilliert und die wässerige Pigmentsuspension abfiltriert. Der Presskuchen wird mit Wasser neutral gewaschen, dann im Vakuumtrockenschrank bei 80°C getrocknet und gepulvert. Man erhält 12,5 g einer roten festen Lösung deren Röntgenbeugungsdiagramm sich von Röntgenbeugungsdiagramm der entsprechenden physikalischen Mischung der oben genannten Ausgangsprodukte unterscheidet. Beim Einarbeiten der festen Lösung in Kunststoffen und Lacken erhält man sehr farbstarke, rote Ausfärbungen hoher Sättigung und mit ausgezeichneten Licht-, Wetter-, Hitze- und Migrationsbeständigkeiten. Eine elektronenmikroskopische Aufnahme der erhaltenen festen Lösung zeigt Pigmentkristalle von einheitlichem, gleichmässigem Kristallhabitus.

Beispiel 6:

In einem 250 ml fassenden Glasgefäss werden 8,5 g 3,6-Di-(4-methylphenyl)-1,4-diketopyrrolo-[3,4-c]-pyrrol, 1,5 g 3,6-Diphenyl-1,4-diketopyrrolo-[3,4-c]-pyrrol in 60 ml conc. Schwefelsäure während zwei Stunden bei 15-20°C verrührt. Die Mischung wird unter Rühren auf 400 ml Eis-Wasser ausgetragen. Man erwärmt die Suspension auf 70°C und rührt während einer Stunde bei 70°C, filtriert heiss ab, wäscht den Presskuchen mit Wasser bis neutral und schlämmt ihn in 100 ml n-Butanol an. Die Suspension wird während 18 Stunden bei Rückflusstemperatur gerührt, auf Raumtemperatur abgekühlt und abfiltriert. Der Presskuchen wird mit n-Butanol gewaschen, im Vakuumtrockenschrank bei 80°C getrocknet und gepulvert. Man erhält 9,3 g einer roten festen Lösung deren Röntgenbeugungsdiagramm sich vom Röntgenbeugungsdiagramm der entsprechenden physikalischen Mischung der obengenannten Ausgangsprodukte unterscheidet. Beim Einarbeiten der festen Lösung in Kunststoffen und Lacken erhält man sehr farbstarke rote Ausfärbungen hoher Deckkraft und mit ausgezeichneten Licht-, Hitze-, Wetter- und Migrationsbeständigkeiten. Eine elektronenmikroskopische Aufnahme der erhaltenen fest Lösung zeigt Pigmentkristalle von einheitlichem gleichmässigem Kristallhabitus.

Beispiel 7:

59,5 g 3,6-Diphenyl-1,4-diketopyrrolo-[3,4-c]-pyrrol, 10,5 g 3,6-Di(3-chlorphenyl)-1,4-diketopyrrolo-[3,4-c]-pyrrol, 4,5 g 8-Hydroxymethyl-tricyclo[5.2.1.0$^{26}$]decan [®TCD-Alkohol M, HOECHST] und 800 ml Wasser werden in einem Becherglas während 1 Stunde bei Raumtemperatur gut verrührt. In einer ®DYNO-Mühle, Typ KDL der Firma Willy A. Bachofen, Basel, versehen mit einem 600 ml fassenden Stahlmahlbehälter, gefüllt mit 480 - 510 ml Glaskugeln mit einem Durchmesser von ca. 1 mm, wird die erhaltene Suspension bei einer Rührgeschwindigkeit von 3000 U/Min. und einer Pumpenförderung von 400 ml/Min. intensiv bei 20-25°C während 3 Stunden 30 Minuten gemahlen. Die Mühle wird mit 1 Liter Wasser im Durchlauf gewaschen und die vereinigte Suspension wird abfiltriert. Der Presskuchen wird mit Wasser gewaschen, im Vakuumtrockenschrank bei 80°C getrocknet und gepulvert. Man erhält eine rote feste Pigment-Lösung deren Röntgenbeugungsdiagramm sich vom Röntgenbeugungsdiagramm der entsprechenden physikalischen Mischung der oben genannten Ausgangsprodukte unterscheidet. Beim Einarbeiten der festen Lösung in Kunststoffe und Lacke erhält man sehr transparente, farbstarke rote Ausfärbungen mit ausgezeichneten Beständigkeiten.

5 g der oben beschriebenen roten feinkristallinen festen Lösung werden in 70 ml n-Butanol während 16 Stunden bei Rückflusstemperatur verrührt. Die Supension wird bei 40°C abfiltriert, der Presskuchen wird mit etwas n-Butanol gewaschen, im Vakuumtrockenschrank bei 80°C getrocknet und gepulvert. Dabei erhält man die oben beschriebene feste Lösung in rekristallisierter grobkristalliner Form, welche beim Applizieren in Kunststoffen und Lacken deckende rote Ausfärbungen mit ausgezeichneten Beständigkeiten ergibt.

Beispiel 8:

Verfährt man analog wie in Beispiel 7 beschrieben, verwendet aber anstelle von 59,5 g lediglich 43,2 g 3,6-Diphenyl-1,4-diketopyrrolo-[3,4-c]-pyrrol und anstelle von 10,5 g 3,6-Di(3-chlorphenyl)-1,4-diketopyrrolo-[3,4-c]-pyrrol 30 g 3,6-Di(4-tert.-butylphenyl)-1,4-diketopyrrolo-[3,4-c]-pyrrol, so erhält man eine blaustichigrote feste Lösung, deren Röntgenbeugungdiagramm sich vom Röntgenbeugungsdiagramm der entsprechenden physikalischen Mischung der oben genannten Ausgangsprodukte unterscheidet. Beim Einarbeiten der festen Lösung in Kunststoffe, wie Polyethylen, erhält man blaustichigrote Ausfärbungen hoher Sättigung und Farbstärk mit ausgezeichneten Licht-, Wetter-und Hitzbeständigkeiten.

Beispiel 9:

Verfährt man analog wie in Beispiel 7 beschrieben, verwendet aber anstelle von 59,5 g 3,6-Diphenyl-1,4-diketopyrrolo-[3,4-c]-pyrrol 63,2 g 3,6-Di-(4-methylphenyl)-1,4-diketopyrrolo-[3,4-c]-pyrrol und anstelle von 10,5 g 3,6-Di-(3-chlorphenyl)-1,4-diketopyrrolo-[3,4-c]-pyrrol 35,7 g 3,6-Di-(4-chlorphenyl)-1,4-diketopyrrolo-[3,4-c]-pyrrol, so erhält man eine rote feste Lösung deren Röntgenbeugungsdiagramm sich vom Röntgenbeugungsdiagramm der entsprechenden physikalischen Mischung der obengenannten Ausgangsprodukte unterscheidet. Beim Einarbeiten der festen Lösung in Kunststoffe und Lacke erhält man sehr farbstarke rot Ausfärbungen.

Rekristallisiert man die erhaltene feinkristalline feste Lösung wie in Beispiel 7 beschrieben in n-Butanol, so erhält man die feste Lösung in grobkristalliner Form, welche beim Einarbeiten in Kunststoffe und Lacke deckende rote Ausfärbungen mit ausgezeichneten Beständigkeiten ergibt. Opake Decklacke mit der so erhaltenen, festen Lösung zeigen im Gegensatz zu solchen mit reinem 3,6-Di-(4-methylphenyl)-1,4-diketopyrrolo-[3,4-c]-pyrrol bei deren Bewitterung kein Nachdunkeln.

Beispiel 10:

In einer Kugelmühle mit einem Inhalt von ca. 1 Liter, enthaltend 1,5 kg Stahlkugeln (Ø: 1,2 cm) und 150 g Nägel (Länge: 3 cm) als Mahlkörper werden 4,4 g 3-(3-Chlorphenyl)-6-phenyl-1,4-diketopyrrolo-[3,4-c]-pyrrol, 0,8 g 3,6-Diphenyl-1,4-diketopyrrolo-[3,4-c]-pyrrol, 0,8 ml Tetrachlorethylen, 0,3 g Dodecylbenzolsulfonsäure-Na-Salz und 20 g Aluminiumsulfat [$Al_2(SO_4)_3$•15-18$H_20$] gegeben. Die gut verschlossene Mühle wird während 6 Stunden auf einer Rollbank bei Raumtemperatur gerollt. Danach wird das Mahlmedium von den Mahlkörpern abgetrennt und in einer Lösung von 1,5 ml conc. Schwefelsäure in 300 ml Wasser verrührt. Die Suspension wird auf 70°C erwärmt und bei dieser Temperatur während 1 1/2 Stunden gerührt. Das Produkt wird abfiltriert, der Presskuchen mit heissem Wasser neutral und salzfrei gewaschen, im Vakuumtrockenschrank bei 70°C getrocknet und gepulvert. Man erhält 4,8 g einer roten festen Lösung, deren Röntgenbeugungsdiagramm sich vom Röntgenbeugungsdiagramm der entsprechenden physikalischen Mischung der oben genannten Ausgangsprodukte unterscheidet. Beim Einarbeiten in Kunststoffe und Lacke erhält man sehr farbstarke rote Ausfärbungen mit sehr guten Licht-, Hitze- und Migrationsbeständigkeiten.

Rekristallisiert man die erhaltene feinkristalline feste Lösung wie in Beispiel 7 beschrieben in n-Butanol, so erhält man die feste Lösung in grobkristalliner Form, welche beim Einarbeiten in Kunststoffe und Lacke deckende rote Ausfärbungen mit ausgezeichneten Beständigkeiten ergibt.

Beispiel 11:

Verfährt man analog wie in Beispiel 10 beschrieben, verwendet aber anstelle von 3,6-Diphenyl-1,4-diketopyrrolo-[3,4-c]-pyrrol die gleiche Menge (immer Gewichtsmenge gemeint) 3,6-Di-(3-cyanophenyl)-1,4-diketopyrrolo-[3,4-c]-pyrrol, so erhält man eine orangefarbige feste Lösung, deren Röntgenbeugungsdiagramm sich vom Röntgenbeugungsdiagramm der physikalischen Mischung der entsprechenden Ausgangsprodukte unterscheidet, mit ausgezeichneten Pigmenteigenschaften.

Beispiel 12:

Verfährt man analog wie in Beispiel 10 beschrieben, verwendet aber anstelle von 3,6-Diphenyl-1,4-diketopyrrolo-[3,4-c]-pyrrol die gleiche Menge 3,6-Di-(3-methylphenyl)-1,4-diketopyrrolo-[3,4-c]-pyrrol, so erhält man eine rote feste Lösung, deren Röntgenbeugungsdiagramm sich vom Röntgenbeugungsdiagramm der physikalischen Mischung der entsprechenden Ausgangspigmente unterscheidet, mit ausgezeichneten Pigmenteigenschaften bei deren Einarbeitung in Kunststoffe und Lacke.

Beispiel 13:

Verfährt man analog wie in Beispiel 10 beschrieben, verwendet aber anstelle von 4,4 g 0,8 g 3-(3-Chlorphenyl)-6-phenyl-1,4-diketopyrrolo-[3,4-c]-pyrrol und anstelle von 0,8 g 3,6-Di-phenyl-1,4-diketopyrrolo-[3,4-c]-pyrrol 4,4 g 3-(3-Chlorphenyl)-6-phenyl-1,4-diketopyrrolo-[3,4-c]-pyrrol, so erhält man eine rote feste Lösung, deren Röntgenbeugungsdiagramm sich vom Röntgenbeu gungsdiagramm der physikalischen Mischung der entsprechenden Ausgangspigmente unterscheidet. Beim Einarbeiten der so erhaltenen festen Lösung in Kunststoffe und Lacke erhält man rote Ausfärbungen mit ausgezeichneten Hitze-, Licht-, Wetter- und Migrationsbeständigkeiten.

Beispiel 14:

Verfährt man analog wie in Beispiel 10 beschrieben, verwendet aber anstelle von 3,6-Diphenyl-1,4-diketopyrrolo-[3,4-c]-pyrrol die gleiche Menge 3-(4-Chlorphenyl)-1,4-diketopyrrolo-[3,4-c]-pyrrol, so erhält man eine rote feste Lösung, deren Röntgenbeugungsdiagramm sich vom Röntgenbeugungsdiagramm der physikalischen Mischung der entsprechenden Ausgangsprodukte unterscheidet. Beim Einarbeiten der erhaltenen festen Lösung in Kunststoffe und Lacke erhält man rote Ausfärbungen mit ausgezeichneten Hitze-, Licht-, Wetter- und Migrationsbeständigkeiten.

Beispiel 15:

Verfährt man analog wie in Beispiel 14 beschrieben, verwendet aber anstelle von 0,8 g 2,1 g 3-(4-Chlorphenyl)-6-phenyl-1,4-diketopyrrolo-[3,4-c]-pyrrol und anstelle von 4,4 g 3-(3-Chlorphenyl)-6-phenyl-1,4-diketopyrrolo-[3,4-c]-pyrrol, 3,1 g 3-(4-Chlorphenyl)-1,4-diketopyrrolo-[3,4-c]-pyrrol, so erhält man eine rote feste Lösung, deren Röntgenbeugungsdiagramm sich von demjenigen der physikalischen Mischung der entsprechenden Ausgangsprodukte unterscheidet. Beim Einarbeiten der erhaltenen festen Lösung in Kunststoffe und Lacke erhält man rote Ausfärbungen mit ausgezeichneten Hitze-, Licht-, Wetter- und Migrationsbeständigkeiten.

Beispiel 16:

Verfährt man analog wie in Beispiel 13 beschrieben, verwendet aber anstelle von 3-(3-Chlorphenyl)-6-phenyl-1,4-diketopyrrolo-[3,4-c]-pyrrol die gleiche Menge 3,6-Di-(3-chlorphenyl)-1,4-diketopyrrolo-[3,4-c]-pyrrol, so erhält man eine rote feste Lösung, deren Röntgenbeugungsdiagramm sich vom Röntgenbeugungsdiagramm der physikalischen Mischung der entsprechenden Ausgangsprodukte unterscheidet und deren Einarbeitung in Kunststoffe und Lacke rote Ausfärbungen mit ausgezeichneten Beständigkeiten ergeben.

Beispiel 17:

Verfährt man analog wie in Beispiel 14 beschrieben, verwendet aber anstelle von 3-(3-Chlorphenyl)-6-phenyl-1,4-diketopyrrolo-[3,4-c]-pyrrol die gleiche Menge 3,6-Di-(4-methylphenyl)-1,4-diketopyrrolo-[3,4-c]-pyrrol, so erhält man eine rote feste Lösung, deren Röntgenbeugungsdiagramm sich vom Röntgenbeugungsdiagramm der physikalischen Mischung der entsprechenden Ausgangsprodukte unterscheidet und deren Einarbeitung in Kunststoffe und Lacke rote Ausfärbungen mit ausgezeichneten Beständigkeiten, hoher Sättigung und wenn rekristallisiert in organ. Lösungsmitteln wie n-Butanol hoher Deckkraft ergibt.

Beispiel 18:

Verfährt man analog wie in Beispiel 12 beschrieben, verwendet aber anstelle von 3-(3-Chlorphenyl)-6-phenyl-1,4-diketopyrrolo-[3,4-c]-pyrrol die gleiche Menge 3-(4-Chlorphenyl)-6-phenyl-1,4-diketopyrrolo-[3,4-c]-pyrrol, so erhält man eine rote feste Lösung, deren Röntgenbeugungsdiagramm sich von demjenigen der physikalischen Mischung der entsprechenden Ausgangsverbindungen unterscheidet und deren Einarbeitung in Kunststoffe und Lacke rote Färbungen mit hohen Beständigkeiten ergibt.

Beispiel 19:

40 mg der gemäss Beispiel 1b erhaltenen festen Lösung werden mit 7, 3 ml Dioctylphthalat und 13,3 g eines stabilisierten Polyvinylchlorids vom Typ ®LONZA E 722 in einem Becherglas mit einem Glasstab gut vermischt. Das Gemisch wird auf einem Walzenstuhl während 5 minuten bei 160°C zu einer dünnen Folie verarbeitet. Die so erzeugte PVC-Folie weist einer sehr farbstarke, migrations- und lichtbeständige blaustichig rote Färbung auf.

Beispiel 20:

Eine Mischung von
130 Teilen Steatitkugeln (∅ = 8mm)
47,5 Teilen eines thermohärtenden Acryllacks, bestehend aus
41,3 Teilen Acrylharz ®VIACRYL VC 373, 60 % (VIANOVA Kunstharz AG),
16,3 Teilen Melaminharz ®MAPRENAL TTX, 55 % (HOECHST AG),
32,8 Teilen Xylol,
4,6 Teilen Ethylglykolacetat,
2,0 Teilen Butylacetat und
1,0 Teil ®Silikonöl A, 1 % in Xylol (BAYER AG), und
2,5 Teile der nach Beispiel 7 erhaltenen festen Lösung
wird in einer 200 ml Glasflasche mit "Twist-Off"-Verschluss während 72 Stunden auf dem Rollgestell dispergiert. Nach Abtrennen der Steatitkugeln werden
8,0 Teile der so dispergierten Volltonmischung,
0,6 Teile Aluminiumpaste ®ALCOA (60-65 % Al-Gehalt, Aluminium Corp. of America)

1,0 Teil Methylethylketon und
18,4 Teile des obigen thermohärtenden Acryllacks
gut vermischt, auf Aluminiumbleche gespritzt und anschliessend während 30 Minuten bei 130°C eingebrannt.

Man erhält sehr farbstarke rote Metalleffektlackierungen mit ausgezeichneten Beständigkeiten.

Verwendet man anstelle der festen Lösung gemäss Beispiel 7 eine andere Lösung gemäss einem der anderen Beispiele, so erhält man ebenso hochwertige Ausfärbungen.

Beispiel 21:

Eine Mischung von 130 g Steatitkugeln von 8 mm Durchmesser, 47,5 g Alkydmelamineinbrennlack, bestehend aus 60 g kurzöligem Alkydharz ®BECKOSOL 27-320 (Reichhold Chemie AG) 60%-ig in Xylol, 36 g Melaminharz ®SUPER-BECKAMIN 13-501 (Reichhold Chemie AG) 50%-ig in Xylol:Butanol (2:1-Gemisch), 2 g Xylol und 2 g Ethylenglykolmonomethylether, und 2,5 g der nach Beispiel 5 erhaltenen festen Lösung werden in einer 200 ml fassenden Glasflasche mit "Twist-Off"-Verschluss während 120 Stunden auf einem Rollgestell dispergiert. Nach Abtrennen der Steatitkugeln werden 2,4 g der so dispergierten Volltonmischung mit 60 g Titandioxid ®KRONOS RN 59 (KRONOS Titan GmbH) und weiteren 24,0 g Alkydmelamineinbrennlacks vermischt, auf Aluminiumbleche gespritzt und anschliessend während 30 Minuten bei 130°C eingebrannt. Man erhält sehr farbstarke rote Ausfärbungen mit ausgezeichneten Beständigkeiten.

Beispiel 22:

Eine Mischung bestehend aus 1,0 g der nach Beispiel 9 erhaltenen festen Lösung, 1,0 g Antioxydans (®IRGANOX 1010, CIBA-GEIGY AG) und 1000 g Polyethylen-HD Granulat (®VESTOLEN A 60-16, HUELS) wird während 15 Minuten in einer Glasflasche auf einer Rollbank vorgemischt. Danach wird die Mischung in zwei Passagen auf einem Einwellenextruder extrudiert. Das so erhaltene Granulat wird auf der Spritzgussmaschine (Allround Aarburg 200) bei 220°C zu Platten verspritzt und 5 Minuten bei 180 °C nachgepresst. Die Pressplatten weisen farbstarke rote Nuancen mit ausgezeichneten Beständigkeiten auf.

Beispiel 23:

1000 g Polypropylengranulat (®DAPLEN PT-55, Chemie LINZ) und 20 g eines 50%-igen Pigmentpräparates, bestehend aus 10 g der nach Beispiel 14 erhaltenen festen Lösung und 10 g Mg-Behenat, werden in einer Mischtrommel intensiv vermischt. Das so behandelte Granulat wird bei 260 bis 285°C nach dem Schmelzspinnverfahren versponnen. Man erhält rotgefärbte Fasern mit sehr guten Licht- und textilen Echtheiten.

## Patentansprüche

1. Feste Lösungen von 1,4-Diketo-pyrrolo-[3,4-c]-pyrrolen, bestehend aus zwei unterschiedlichen Verbindungen der Formeln

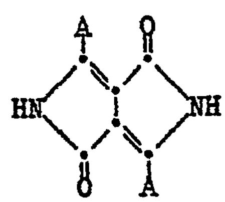

und

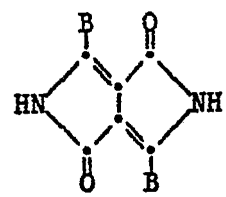

(I) (II),

der Formeln

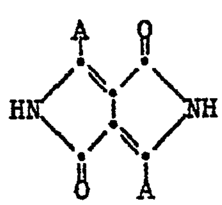

und

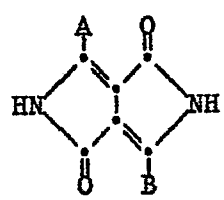

(I) (III)

oder der Formeln

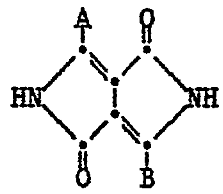 und 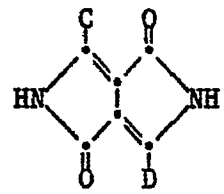

(III) (IV) ,

worin A eine der Gruppen

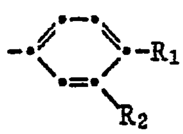 , 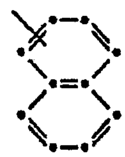 , 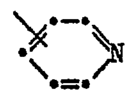 ,

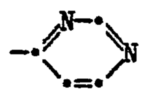 , 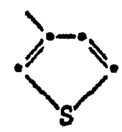

und B, C und D unabhängig voneinander eine der Gruppen

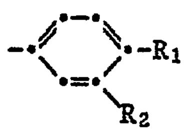 oder 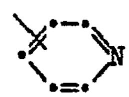

bedeuten, worin $R_1$ und $R_2$ unabhängig voneinander Wasserstoff, Halogen, $C_1$-$C_5$-Alkyl, $C_1$-$C_5$-Alkoxy, $-SR_3$, $-N(R_3)_2$, $-CF_3$, -CN oder eine Gruppe der Formeln

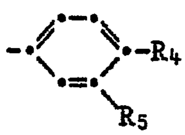 , 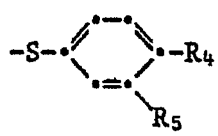 oder 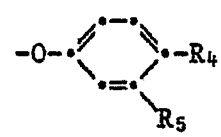

bedeuten $R_3$ $C_1$-$C_5$-Alkyl ist und $R_4$ und $R_5$ unabhängig voneinander Wasserstoff, Halogen, $C_1$-$C_5$-Alkyl, $C_1$-$C_5$-Alkoxy, $-SR_3$ oder CN bedeuten, wobei sich die Röntgenbeugungsdiagramme der festen Lösungen von der Summe der Röntgenbeugungsdiagramme der Einzelkomponenten unterscheiden.

2. Feste Lösungen gemäss Anspruch 1, dadurch gekennzeichnet, dass das Verhältnis zwischen den beiden Komponenten der Formeln I:II, I:III oder III:IV 50-95:5-50 Gew.% beträgt.

3. Feste Lösungen gemäss Anspruch 1, dadurch gekennzeichnet, dass sie aus zwei unterschiedlichen Verbindungen der Formeln I und II bestehen, worin A und B die in Anspruch 1 angegebene Bedeutung haben.

4. Feste Lösungen gemäss Anspruch 1, dadurch gekennzeichnet, dass sie aus zwei unterschiedlichen Verbindungen der Formeln I und II bestehen, worin A und B unabhängig voneinander eine Gruppe der Formeln

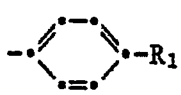 oder 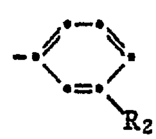

bedeuten, worin $R_1$ Wasserstoff, Chlor, Brom, Cyano, Methyl, Ethyl, tert.-Butyl oder Phenyl und $R_2$ Wasserstoff, Chlor, Methyl oder Cyano bedeuten.

5. Feste Lösungen gemäss Anspruch 1, dadurch gekennzeichnet, dass sie aus den Verbindungen der Formeln

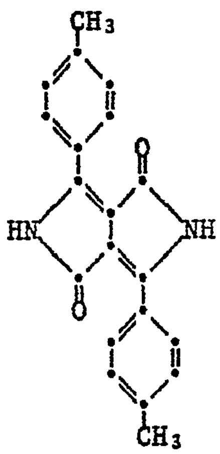

und

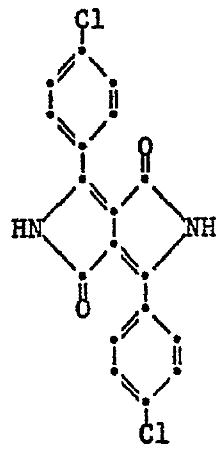

besteht.

6. Feste Lösungen gemäss Anspruch 1, dadurch gekennzeichnet, dass sie aus den Verbindungen der Formeln

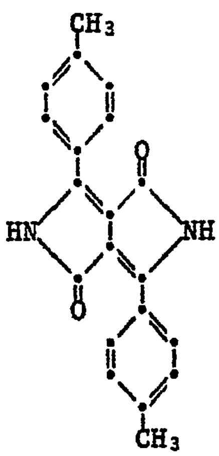

und

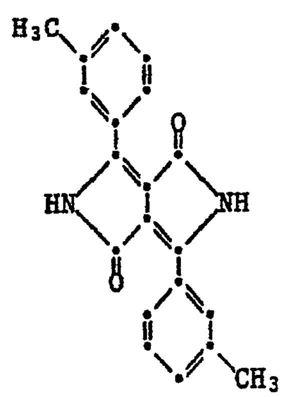

besteht.

7. Verfahren zum Färben von hochmolekularem organischem Material durch Einarbeiten von festen Lösungen gemäss Anspruch 1.

8. Hochmolekulares organisches Material enthaltend feste Lösungen gemäss Anspruch 1.

**Claims**

1. A solid solution of 1,4-diketo-pyrrolo-[3,4-c]-pyrroles consisting of two different compounds of the formulae

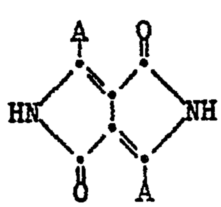

(I)

and

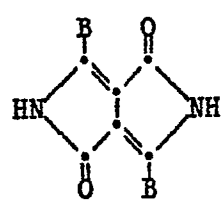

(II),

of the formulae

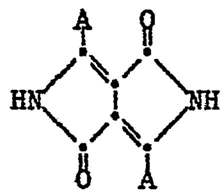 and 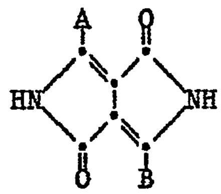

(I) (III)

or of the formulae

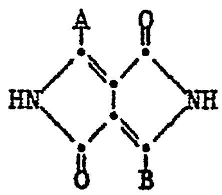 and 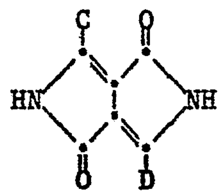

(III) (IV) ,

in which A is one of the groups

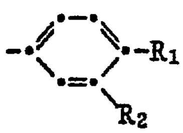 , 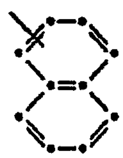 , 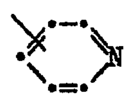 ,

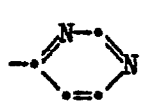 , 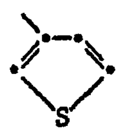

and B, C and D are each independently one of the groups

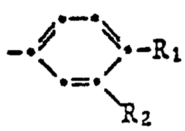 or 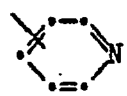

in which $R_1$ and $R_2$ are independently of one another hydrogen, halogen, $C_1$–$C_5$alkyl, $C_1$–$C_5$alkoxy, $-SR_3$, $-N(R_3)_2$, $-CF_3$, –CN or a group of the formulae

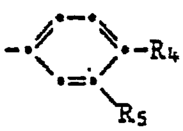 , 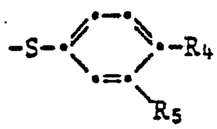 or 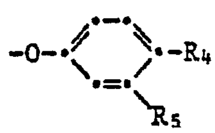

$R_3$ is $C_1$–$C_5$alkyl and $R_4$ and $R_5$ are independently of one another hydrogen, halogen, $C_1$–$C_5$alkyl, $C_1$–$C_5$alkoxy, $-SR_3$ or CN, in which the X-ray diffraction patterns of the solid solutions differ from the sum of the X-ray diffraction patterns of the individual components.

2. A solid solution according to claim 1, wherein the ratio between the two components of the formulae I:II, I:III or III:IV is 50–95:5–50% by weight.

3. A solid solution according to claim 1, which consists of two different compounds of the formulae I and II in which A and B have the meaning given in claim 1.

4. A solid solution according to claim 1, which consists of two different compounds of the formulae I and II in which A and B are independently of one another a group of the formulae

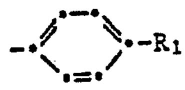

or

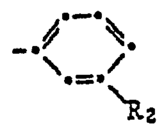

in which $R_1$ is hydrogen, chlorine, bromine, cyano, methyl, ethyl, tert-butyl or phenyl and $R_2$ is hydrogen, chlorine, methyl or cyano.

5. A solid solution according to claim 1, which consists of compounds of the formulae

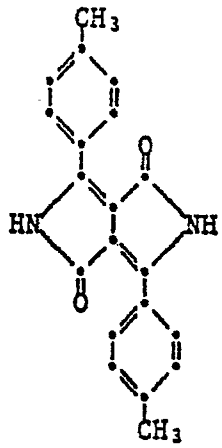

and

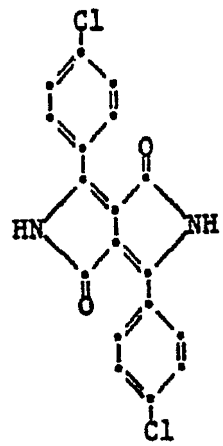

6. A solid solution according to claim 1, which consists of compounds of the formulae

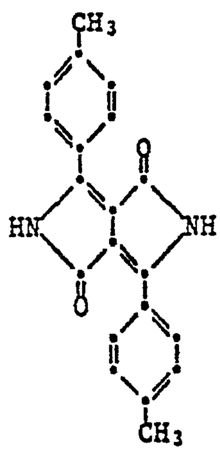

and

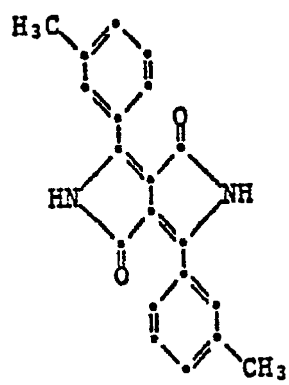

7. Process for the colouration of high molecular weight organic material through the incorporation of the solid solution according to claim 1.

8. High molecular weight organic material containing a solid solution according to claim 1.

**Revendications**

1. Solutions solides de dicéto-1,4 pyrrolo-[3,4-c]-pyrroles, consistant en deux composés différents répondant aux formules

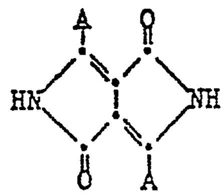
(I)

et

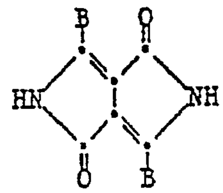
(II),

aux formules

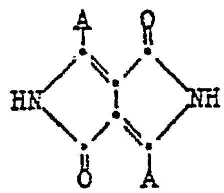
(I)

et

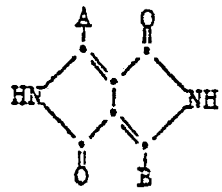
(III)

ou aux formules

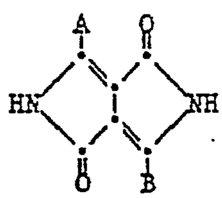
(III)

et

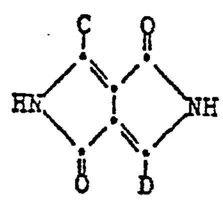
(IV) ,

dans lesquelles A représente l'un des groupes

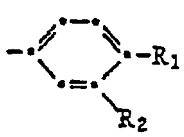
,
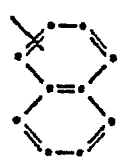
,
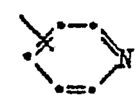
,
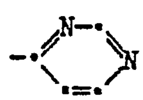
,
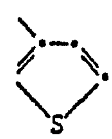

et B, C et D représentent, indépendamment l'un de l'autre, les groupes

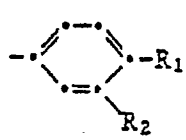
ou
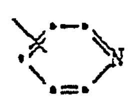

où $R_1$ et $R_2$ représentent, indépendamment l'un de l'autre, un atome d'hydrogène ou d'halogène, un groupe alkyle en $C_1$ à $C_5$, alcoxy en $C_1$ à $C_5$, $-SR_3$, $-N(R_3)_2$, $-CF_3$, $-CN$ ou un groupe de formule

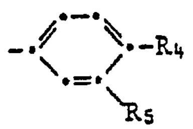 , 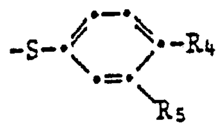 ou 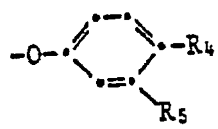

$R_3$ représente un groupe alkyle ayant 1 à 5 atomes de carbone et $R_4$ et $R_5$ représentent, indépendamment l'un de l'autre, un atome d'hydrogène ou d'halogène, un groupe alkyle en $C_1$ à $C_5$, alcoxy en $C_1$ à $C_5$, $-SR_3$ ou CN, les spectres ou diagrammes de diffraction des rayons X caractérisant les solutions solides différant de la somme des spectres ou diagrammes de diffraction des rayons X par les composants individuels.

2. Solutions solides selon la revendication 1, caractérisées en ce que le rapport entre les deux composants répondant aux formules I:II, I:III ou III:IV, se situe entre 50 et 95:5 à 50% en poids.

3. Solutions solides selon la revendication 1, caractérisées en ce qu'elles consistent en deux composants différents répondant aux formules I et II, dans lesquelles A et B ont le sens indiqué à la revendication 1.

4. Solutions solides selon la revendication 1, caractérisées en ce qu'elles consistent en deux composés différents répondant aux formules I et II, dans lesquelles A et B représentent, indépendamment l'un de l'autre, un groupe de formule

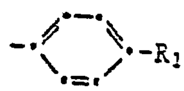 ou 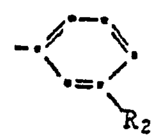

où $R_1$ représente un atome d'hydrogène, de chlore ou de brome, un groupe cyanol, méthyle, éthyle, tertiobutyle ou phényle, et $R_2$ représente un atome d'hydrogène ou de chlore ou un groupe méthyle ou cyano.

5. Solution solide selon la revendication 1, caractérisée en ce qu'elle consiste en les composés répondant aux formules

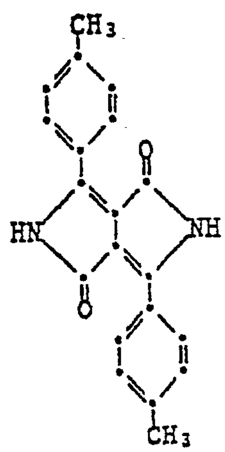 et 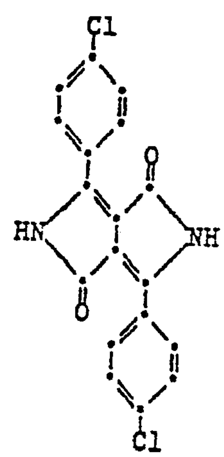

6. Solution solide selon la revendication 1, caractérisée en ce qu'elle consiste en les composés répondant aux formules

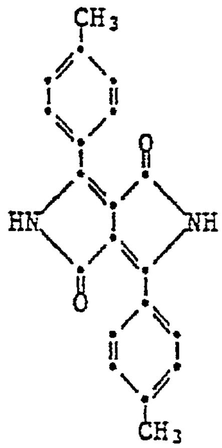

et

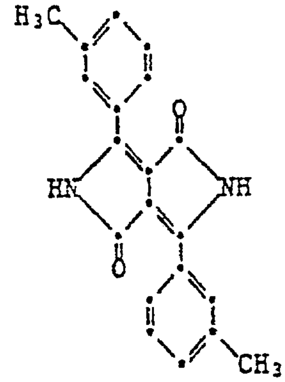

7. Procédé pour colorer ou teindre de la matière organique à poids moléculaire élevé, par incorporation de solutions solides selon la revendication 1.

8. Matière organique à poids moléculaire élevée, contenant des solutions solides selon la revendication 1.